# EUROPEAN PATENT APPLICATION

(11) **EP 2 928 239 A1**
(43) Date of publication of application: **07.10.2015**
(21) Application number: 13860515.9
(22) Date of filing: 03.12.2013
(51) Int. Cl.: H04W 48/08

(54) **METHOD, DEVICE AND SYSTEM FOR PROCESSING WIRELESS NETWORK USER ACCESS**

(30) Priority: 03.12.2012 CN 201210509152
(71) Applicant: Huawei Technologies Co., Ltd., Longgang District Shenzhen, Guangdong 518129 (CN)
(72) Inventor: ZHANG, Wei, Shenzhen Guangdong 518129 (CN); WU, Jianjun, Shenzhen Guangdong 518129 (CN); PENG, Chenghui, Shenzhen Guangdong 518129 (CN)
(74) Representative: Haley, Stephen
(86) International application number: PCT/CN2013/088440
(87) International publication number: WO 2014/086280

(57) **Abstract**

Embodiments of the present invention provide a cellular network controller, including: a wireless protocol processing module, configured to process a wireless handover request from a radio network user or a radio network access network, and report a processing result; a policy control module, configured to formulate a bearer forwarding policy of a handover user according to event information pre-stored in the cellular network controller and the processing result reported by the wireless protocol processing module; and a policy delivering module, configured to deliver the bearer forwarding policy formulated by the policy control module to a policy executor corresponding to the handover user for executing, so that a packet sent to the handover user is forwarded according to the bearer forwarding policy. The embodiments of the present invention further provide a related method, apparatus, and system for processing radio network user access. By using the foregoing solutions in the embodiments of the present invention, signaling negotiation among multiple control entities is decreased, thereby reducing waste of network resources.

## Description

### TECHNICAL FIELD

The present invention relates to the field of power supply, and in particular, to a method, an apparatus, and a system for processing radio network user access.

### BACKGROUND

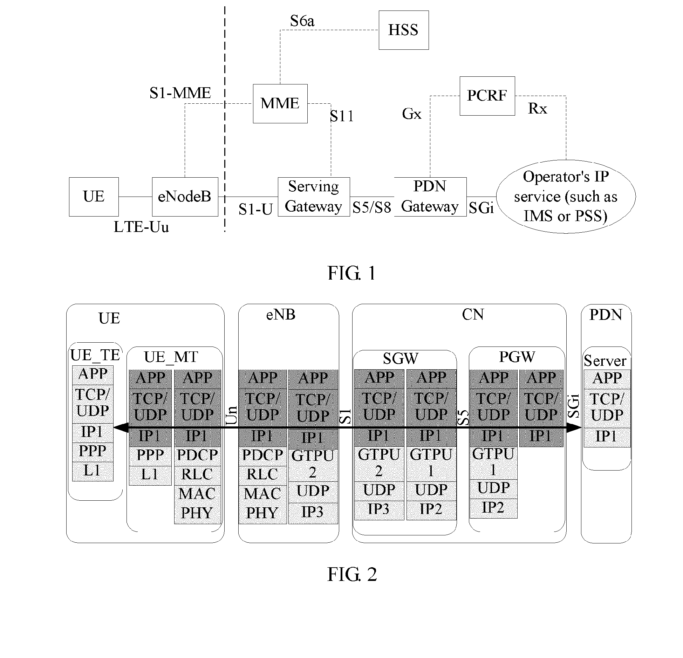

A traditional wireless cellular network such as a 2G/3G/4G communications network mainly includes two parts: a core network and an access network. An LTE system is used as an example, and a network architecture of the LTE system is shown in FIG. 1. In an LTE network architecture, a core network mainly includes an MME, an S-GW, and a P-GW, where the MME is a mobility management entity, processes non-access stratum (NAS) signaling between a UE and the CN, and includes bearer and link management; the S-GW is a serving gateway and is an anchor of another 3GPP standard (GSM/LTMTS); and the P-GW is a packet data network gateway, is responsible for IP address assigning and QoS, and is an anchor of a non-3GPP standard (such as CDMA2000 or WiMAX). A radio access network mainly includes eNodebs, which implements two-layer structure simplification of 2G/3G, where the eNodeBs are mainly responsible for radio resource management, IP data header compression, air interface encryption and decryption, and the like.

To deal with a movement of a user terminal, a user data routing solution designed in a traditional wireless cellular network mainly is a manner of a tunnel such as a GTP tunnel. For example, in an LTE system, a user plane protocol stack of the LTE system is shown in FIG. 2. It may be learned from FIG. 2 that in an LTE architecture, an IP packet between an eNB and an SGW and an IP packet between the SGW and a PGW are carried on GTP, which causes that a relatively complex bearer setup process must be performed before formal data transmission. A bearer may be construed as a packet transmission channel, and context information is saved in an intermediate node of a packet transmission path, so that the intermediate node can accurately find a previous hop node and a next hop node.

In a traditional cellular network, because a GTP tunnel reaches a location of a PGW, a bearer channel of the GTP tunnel must also reach the location of the PGW in a core network. In a path from a UE to a PDN, and in an active state, a tunnel needs to be set up between any two nodes, and the tunnel between the two nodes must be maintained by using signaling. However, when the active state is switched to an idle state, the tunnel needs to be removed by using signaling. This operation may cause a relatively large signaling overhead, thereby greatly wasting network resources.

### SUMMARY

Embodiments of the present invention provide a method, an apparatus, and a system for processing radio network user access, to reduce signaling negotiation among multiple control entities, thereby reducing waste of network resources.

According to a first aspect, the present application provides a cellular network controller, including:
a wireless protocol processing module, configured to process a wireless handover request from a radio network user or a radio network access network, and report a processing result;
a policy control module, configured to formulate a bearer forwarding policy of a handover user according to event information pre-stored in the cellular network controller and the processing result reported by the wireless protocol processing module; and
a policy delivering module, configured to deliver the bearer forwarding policy formulated by the policy control module to a policy executor corresponding to the handover user for executing, so that a packet sent to the handover user is forwarded according to the bearer forwarding policy.

With reference to the first aspect, in a first possible implementation manner, the cellular network controller further includes:
a first setup module, configured to: if the policy executor is a border gateway router GR, set up a control relationship with the GR based on the OpenFlow protocol.

With reference to the first aspect or the first possible implementation manner of the first aspect, in a second possible implementation manner, the cellular network controller further includes:
a second setup module, configured to: if the policy executor is a radio network access device, set up a control relationship with the radio network access device based on the OpenRadio protocol and the OpeFlow protocol.

With reference to the first aspect or either of the foregoing possible implementation manners of the first aspect, in a third possible implementation manner, the policy control module has control plane functions of an IP layer and upper layers of the IP layer.

With reference to the first aspect or any one of the foregoing possible implementation manners of the first aspect, in a fourth possible implementation manner, the event information includes network topology information of the radio network access network and/or state information of the radio network user.

According to a second aspect, the present application provides a border gateway router, including:
a policy receiving module, configured to receive a bearer forwarding policy of a handover user that is delivered by a cellular network controller, where the bearer forwarding policy is formulated by the cellular network controller according to event information pre-stored in the cellular network controller and a wireless handover request from a radio network user or a radio network access network; and
a policy executing module, configured to forward, according to the bearer forwarding policy received by the policy receiving module, a packet sent to the handover user.

With reference to the second aspect, in a first possible implementation manner, the policy executing module has user plane processing functions of an IP layer and upper layers of the IP layer.

According to a third aspect, the present application provides a radio network access device, including:
an event information reporting module, configured to: when a specific radio network user generates set event information, send the event information to a cellular network controller, so that the cellular network controller applies the behavior event information to formulating of a bearer forwarding policy of a handover user; and
a policy receiving and executing module, configured to receive the bearer forwarding policy of the handover user that is delivered by the cellular network controller, and forward, according to the bearer forwarding policy, a packet sent to the handover user.

With reference to the third aspect, in a first possible implementation manner, the policy receiving and executing module receives the bearer forwarding policy based on the OpenFlow protocol.

With reference to the third aspect or any one of the foregoing possible implementation manners of the third aspect, in a second possible implementation manner, the policy receiving and executing module receives the bearer forwarding policy based on the OpenRadio protocol.

According to a fourth aspect, the present application provides a wireless network architecture, including the cellular network controller according to the first aspect or any possible one of the foregoing possible implementation manners of the first aspect, the border gateway router according to the second aspect or any possible one of the foregoing possible implementation manners of the second aspect, and the radio network access device according to the third aspect or either of the foregoing possible implementation manners of the third aspect.

According to a fifth aspect, the present application provides a method for processing network access of a radio network user, where the method is applied to a cellular network controller:
receiving an access request of a radio network user, where the access request includes identifier information of the radio network user and related information of an access network;
authenticating an identifier of the radio network user and identifying an access location of the radio network user according to the identifier information of the radio network user and the related information of the access network;
performing authorization and authentication on the radio network user;
specifying a border gateway router for the radio network user according to the identifier information of the radio network user and the access location of the radio network user and with reference to event information stored in the cellular network controller, and delivering an address of the border gateway router to the radio network user, where the border gateway router is used to assign an IP address to the radio network user;
receiving context information of the radio network user that is updated by the border gateway router, and formulating a bearer forwarding policy for the radio network user according to the context information, where the updated context information of the radio network user is obtained after the border gateway router fills the IP address assigned to the radio network user in a corresponding location of the context information of the radio network user; and
delivering the bearer forwarding policy to the border gateway router.

With reference to the third aspect, in a first possible implementation manner, the bearer forwarding policy of the user is determined by the cellular network controller and the router through negotiation, and the first possible implementation manner further includes:
delivering the bearer forwarding policy to a radio access device.

According to a sixth aspect, the present application provides a method for processing a radio network user handover, including:
receiving a path switching request of a radio network user that is sent by using a target radio access device;
updating context information of the radio network user according to the handover request, and sending an update request to a border gateway router to which the radio network user currently belongs, to instruct the border gateway router to update a data bearer forwarding policy of the user, and send a data bearer of the user to the target radio access device;
receiving an update response message for the update request that is sent by the border gateway router; and
sending a path switching request acknowledgment to the radio network user by using the target radio access device, where the path switching request acknowledgment indicates that a radio bearer of the user has been switched.

With reference to the sixth aspect, in a first possible implementation manner, after the sending a path switching request acknowledgment to the radio network user by using the target radio access device, the method further includes:
determining whether an IP address needs to be re-assigned to the radio network user; and
including an IP address request message into an update request if an IP address needs to be re-assigned to the radio network user, so that after receiving the update request, the border gateway router to which the radio network user currently belongs delivers the update response message that carries a new IP address to the radio network user.

With reference to the sixth aspect or the first possible implementation manner of the sixth aspect, in a second possible implementation manner, after the receiving a path switching request of a radio network user that is sent by using a target radio access device, the method further includes:
determining, according to an address of the target radio access device, whether a handover needs to be performed for the radio network user;
specifying a new border gateway router as a target border gateway router for the radio network user if a handover needs to be performed for the radio network user; and
sending a connection setup request to the target border gateway router, where the connection setup request carries an IP address request message, so that after receiving the IP address request message, the target router delivers an IP address to the radio network user, where the IP address is carried in the update response message.

With reference to the sixth aspect or either of the foregoing possible implementation manners of the sixth aspect, in a third possible implementation manner, the method further includes:
negotiating the bearer forwarding policy of the user with the target border gateway router, and formulating a new bearer forwarding policy of the user according to a topology condition of a current network and a condition of the radio network user; and
delivering the new bearer forwarding policy of the user to the target border gateway router or the target radio access device.

According to a seventh aspect, the present application provides a method for processing network access of a radio network user, including:
receiving an IP address setup request initiated by a radio network user;
assigning an IP address to the radio network user and storing context information of the radio network user;
filling the IP address assigned to the radio network user in a corresponding location of the context information of the radio network user, to obtain updated context information of the radio network user;
reporting the updated context information of the radio network user to a cellular network controller, so that the cellular network controller formulates a bearer forwarding policy for the radio network user according to the updated context information of the radio network user; and
receiving the bearer forwarding policy formulated by the cellular network controller for the radio network user.

According to an eighth aspect, the present application provides a method for processing a radio network user handover, including:
receiving an update instruction of a cellular network controller, where the update instruction carries an IP address request message, and the update instruction is sent by the cellular network controller when updating context information of a radio network user after the cellular network controller receives a handover request of the radio network user;
re-assigning an IP address to the radio network user according to the IP address request message; and
receiving a bearer forwarding policy for the radio network user that is formulated for the radio network user and updated by the cellular network controller, where the updated bearer forwarding policy for the radio network user formulated for the radio network user is a new bearer forwarding policy formulated by the cellular network controller for the radio network user according to a topology condition of a current network and a condition of the radio network user.

With reference to the eighth aspect, in a first possible implementation manner, after the re-assigning an IP address to the radio network user according to the IP address request message, the method further includes:
completing, according to the update instruction, data switching with a router newly specified by the cellular network controller.

In the embodiments of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a diagram of an LTE network architecture according to an embodiment of the present invention;
FIG. 2 is a schematic diagram of a protocol stack of an LTE system according to an embodiment of the present invention;
FIG. 3 is a diagram of a new-type communications network architecture according to an embodiment of the present invention;
FIG. 4 is a structural diagram of a cellular network controller according to an embodiment of the present invention;
FIG. 5 is a structural diagram of a radio network border gateway router according to an embodiment of the present invention;
FIG. 6 is a structural diagram of a radio network access device according to an embodiment of the present invention;
FIG. 7 is a schematic diagram of a specific application scenario of a network architecture according to an embodiment of the present invention;
FIG. 8 is a schematic diagram of a user plane protocol stack according to an embodiment of the present invention;
FIG. 9a is a schematic diagram of a control plane protocol stack according to an embodiment of the present invention;
FIG. 9b is a schematic diagram of a control plane protocol stack according to an embodiment of the present invention;
FIG. 10 is a bearer setup flowchart according to an embodiment of the present invention;
FIG. 11 is a handover flowchart according to an embodiment of the present invention;
FIG. 12 is a handover flowchart according to an embodiment of the present invention;
FIG. 13 is a handover flowchart according to an embodiment of the present invention;
FIG. 14 is a schematic diagram of a specific application scenario of a network architecture according to an embodiment of the present invention;
FIG. 15 is a schematic diagram of a C2 interface protocol stack according to an embodiment of the present invention;
FIG. 16 is a bearer setup flowchart according to an embodiment of the present invention;
FIG. 17 is a handover flowchart according to an embodiment of the present invention;
FIG. 18 is a handover flowchart according to an embodiment of the present invention;
FIG. 19 is a schematic diagram of a specific application scenario of a network architecture according to an embodiment of the present invention;
FIG. 20 is a schematic diagram of a C2 interface protocol stack according to an embodiment of the present invention;
FIG. 21 is a flowchart of a method for processing network access of a radio network user according to an embodiment of the present invention;
FIG. 22 is a flowchart of a method for processing a radio network user handover according to an embodiment of the present invention;
FIG. 23 is a flowchart of a method for processing network access of a radio network user according to an embodiment of the present invention; and
FIG. 24 is a flowchart of a method for processing a radio network user handover according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Shifting to all-IP of a network has become a main trend, and a communications network essentially focuses on design of a packet (Packet) forwarding mechanism. A wireless network and a current fixed network differ in terminal mobility that includes a movement between heterogeneous networks. An IP address management mechanism become complex due to mobility, and therefore, an MIP tunnel, a GTP tunnel, and the like have been designed in an existing wireless communications network to resolve this problem. However, introduction of a tunnel increases complexity of protocol stack processing and packet processing and causes a relatively large signaling overhead, thereby greatly wasting network resources.

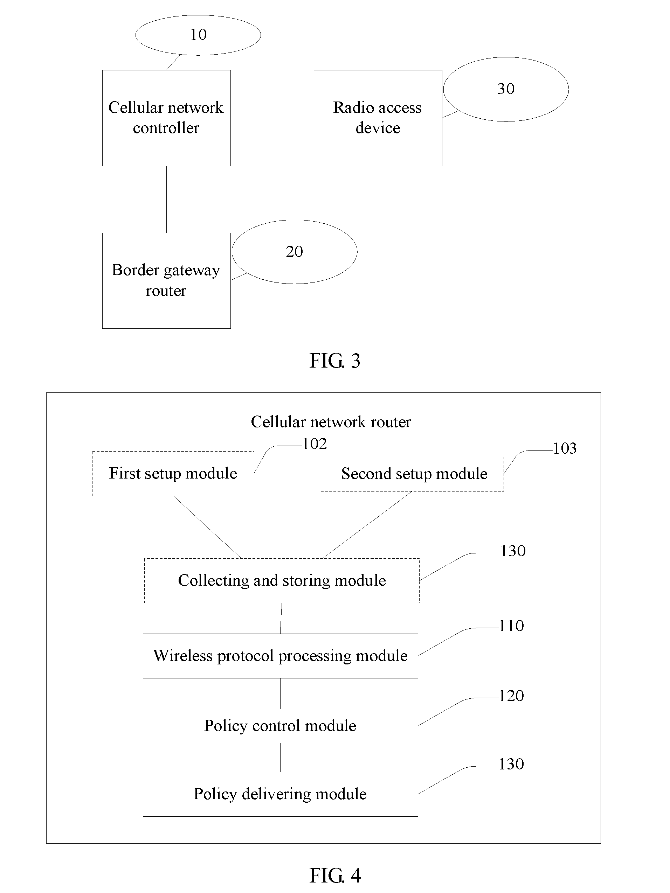

To resolve the foregoing problem, a new-type communications network architecture is introduced in the present invention. As shown in FIG. 3, an embodiment of the present invention provides a communications network architecture, including: a cellular network controller 10, a border gateway router (GR) 20, and a radio network access device 30.

The cellular network controller 10 is configured to process a wireless handover request from a radio network user or a radio network access network, and generate a processing result; formulate a bearer forwarding policy of a handover user according to stored event information and the generated processing result; and deliver the bearer forwarding policy of the handover user to a policy executor corresponding to the handover user for executing, so that a packet sent to the handover user is forwarded according to the bearer forwarding policy.

In this embodiment, processing the handover request refers to performing format conversion inside the cellular network controller 10 on the handover request, to convert the handover request into a format that can be identified and processed by an internal module of the cellular network controller 10.

In an embodiment, the handover request is initiated by a user or a wireless network, and the handover request indicates that the user to be handed over requests a handover from one base station to another base station. A handover between the two base stations may be a handover between base stations of a same standard, or may be a handover between heterogeneous base stations.

The border gateway router (GR) 20 is configured to receive the bearer forwarding policy of the handover user that is delivered by the cellular network controller 10; and forward, according to the bearer forwarding policy received by the policy receiving module, the packet sent to the handover user.

The radio network access device 30 is configured to: when a specific radio network user generates set event information, send the event information to the cellular network controller 10, so that the cellular network controller 10 applies the behavior event information to formulating of the bearer forwarding policy of the handover user; and is configured to receive the bearer forwarding policy of the handover user that is delivered by the network controller, and forward, according to the bearer forwarding policy, the packet sent to the handover user.

In an embodiment, if the policy executor is the border gateway router GR 20, the cellular network controller 10 sets up a control relationship with the GR 20 based on the OpenFlow protocol.

In an embodiment, if the policy executor is the radio network access device 30, the cellular network controller 10 sets up a control relationship with the radio network access device 30 based on the OpenRadio protocol and the OpeFlow protocol.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

As shown in FIG. 4, an embodiment of the present invention provides a cellular network controller, where the cellular network controller sets up a routing control relationship with a wireless network border gateway router (GR), and the cellular network controller includes:
a wireless protocol processing module 110, configured to process a wireless handover request from a radio network user or a radio network access network, and report a processing result; where
in an embodiment, the handover request is initiated by a user or a wireless network, and the handover request indicates that the user requests a handover from one base station to another base station. A handover between the two base stations may be a handover between base stations of a same standard, or may be a handover between heterogeneous base stations;
a policy control module 120, configured to formulate a bearer forwarding policy of a handover user according to event information pre-stored in the cellular network controller and the processing result reported by the wireless protocol processing module 110; where
in an embodiment, the policy control module 120 has control plane functions of an IP layer and upper layers of the IP layer; and
in an embodiment, the event information includes network topology information of the radio access network and/or state information of the radio network user; and
a policy delivering module 130, configured to deliver the bearer forwarding policy formulated by the policy control module 120 to a policy executor corresponding to the handover user for executing, so that a packet sent to the handover user is forwarded according to the bearer forwarding policy.

In an embodiment, the cellular network controller further includes:
a first setup module 102, configured to: if the policy executor is a border gateway router GR, set up a control relationship with the GR based on the OpenFlow protocol.

In an embodiment, the cellular network controller further includes:
a second setup module 103, configured to: if the policy executor is a radio network access device, set up a control relationship with the radio network access device based on the OpenRadio protocol and the OpeFlow protocol.

In an embodiment, the cellular network controller further includes:
a collecting and storing module 101, configured to collect and store the event information, where the event information includes the network topology information of the radio network access network and/or the state information of the radio network user.

In an embodiment, the foregoing wireless network may include: an LTE (Long Term Evolution, Long Term Evolution) network, a 3G (3rd-generation, 3rd Generation Mobile Communication) network, a WiMax (Worldwide Interoperability for Microwave Access, Worldwide Interoperability for Microwave Access) network, a WiFi (Wireless Fidelity, Wireless Fidelity) network, a CDMA (Code-Division Multiple Access, Code Division Multiple Access) network, and the like.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

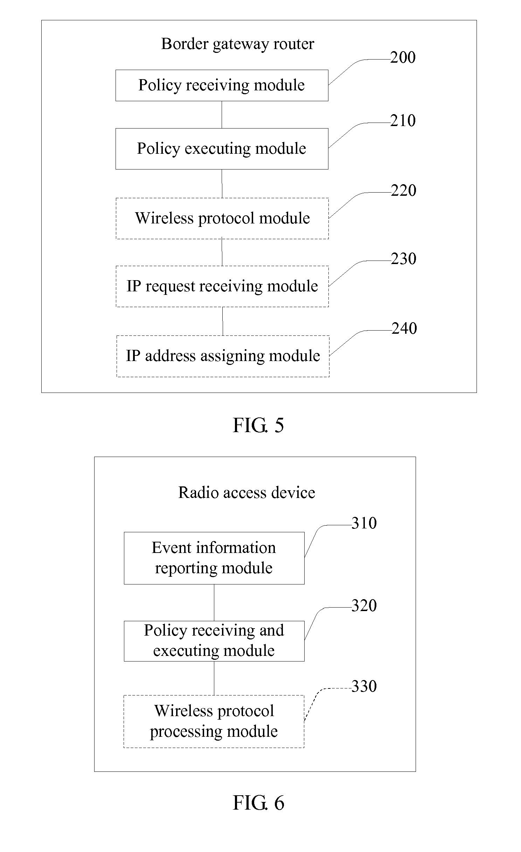

As shown in FIG. 5, an embodiment of the present invention provides a wireless network border gateway router, including:
a policy receiving module 200, configured to receive a bearer forwarding policy of a handover user that is delivered by a cellular network controller, where the bearer forwarding policy is formulated by the cellular network controller according to event information pre-stored in the cellular network controller and a wireless handover request from a radio network user or a radio network access network; and
a policy executing module 210, configured to forward, according to the bearer forwarding policy received by the policy receiving module 200, a packet sent to the handover user.

In an embodiment, the foregoing router may further include:
a wireless protocol module 220, configured to receive the wireless handover request from the radio network user or the radio network access network, and cooperate with the cellular network controller to complete a wireless handover procedure of the radio network user.

In an embodiment, the policy executing module 210 has user plane processing functions of an IP layer and upper layers of the IP layer.

In an embodiment, the router further includes:
an IP request receiving module 230, configured to receive an IP address setup request initiated by the radio network user; and
an IP address assigning module 240, configured to: after the IP address setup request initiated by the radio network user is received, assign an IP address to the radio network user and store context information of the radio network user.

In an embodiment, the wireless protocol module 220 includes:
a handover instruction receiving unit 221, configured to receive an update instruction of the cellular network controller, where the update instruction carries an IP address request message, and the update instruction is sent by the cellular network controller when updating the context information of the radio network user after the cellular network controller receives a handover request of the radio network user; and
a handover unit 222, configured to: when the handover instruction receiving unit 221 receives the update instruction of the cellular network controller, re-assign an IP address to the UE according to the IP address request message.

In an embodiment, the wireless protocol module 220 includes:
a handover instruction receiving unit 223, configured to receive an update instruction of the cellular network controller, where the update instruction is sent by the cellular network controller when updating the context information of the radio network user after the cellular network controller receives the handover request of the radio network user; and
a handover unit 224, configured to: after the handover instruction receiving unit 223 receives the update instruction of the cellular network controller, complete, according to the update instruction, data switching with a router newly specified by the cellular network controller.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

As shown in FIG. 6, an embodiment of the present invention provides a radio network access device, including:
an event information reporting module 310, configured to: when a specific radio network user generates set event information, send the event information to a cellular network controller, so that the cellular network controller applies the behavior event information to formulating of a bearer forwarding policy of a handover user; and
a policy receiving and executing module 320, configured to receive the bearer forwarding policy of the handover user that is delivered by the cellular network controller, and forward, according to the bearer forwarding policy, a packet sent to the handover user.

In an embodiment, managing the radio network user may be that a wireless protocol processing module 320 completes, according to a response of the cellular network controller, a specific action for the UE, such as bearer switching of the radio network access device during a handover of a UE.

In an embodiment, the radio network access device further includes:
the wireless protocol processing module 320, configured to receive an instruction of the cellular network controller, and manage the radio network user according to the instruction.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

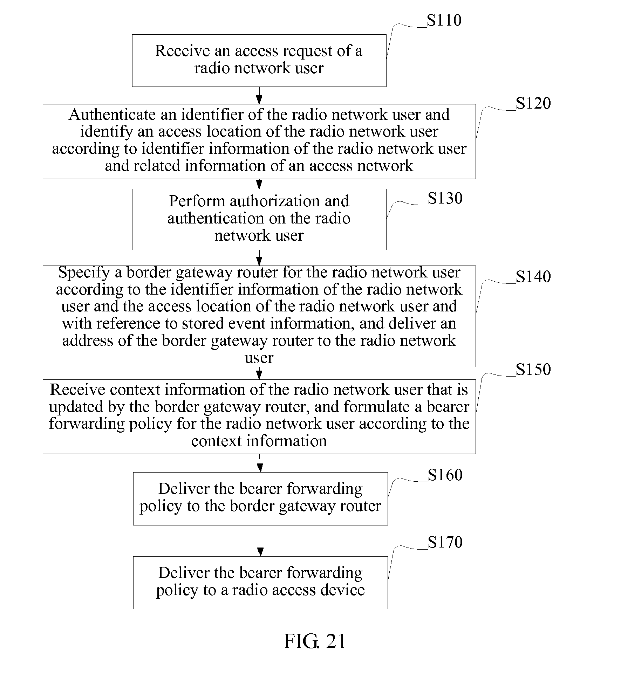

As shown in FIG. 21, an embodiment of the present invention further provides a method for processing network access of a radio network user, including:
S110: Receive an access request of a radio network user, where the access request includes identifier information of the radio network user and related information of an access network.
S120: Authenticate an identifier of the radio network user and identify an access location of the radio network user according to the identifier information of the radio network user and the related information of the access network.
S130: Perform authorization and authentication on the radio network user.
S140: Specify a border gateway router for the radio network user according to the identifier information of the radio network user and the access location of the radio network user and with reference to stored event information, and deliver an address of the border gateway router to the radio network user, where the border gateway router is used to assign an IP address to the radio network user.
S150: Receive context information of the radio network user that is updated by the border gateway router, and formulate a bearer forwarding policy for the radio network user according to the context information, where the updated context information of the radio network user is obtained after the border gateway router fills the IP address assigned to the radio network user in a corresponding location of the context information of the radio network user.

In an embodiment, the bearer forwarding policy is determined by the cellular network controller and the router through negotiation.

S160: Deliver the bearer forwarding policy to the border gateway router.

In an embodiment, the method further includes:
S170: Deliver the bearer forwarding policy to a radio access device.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

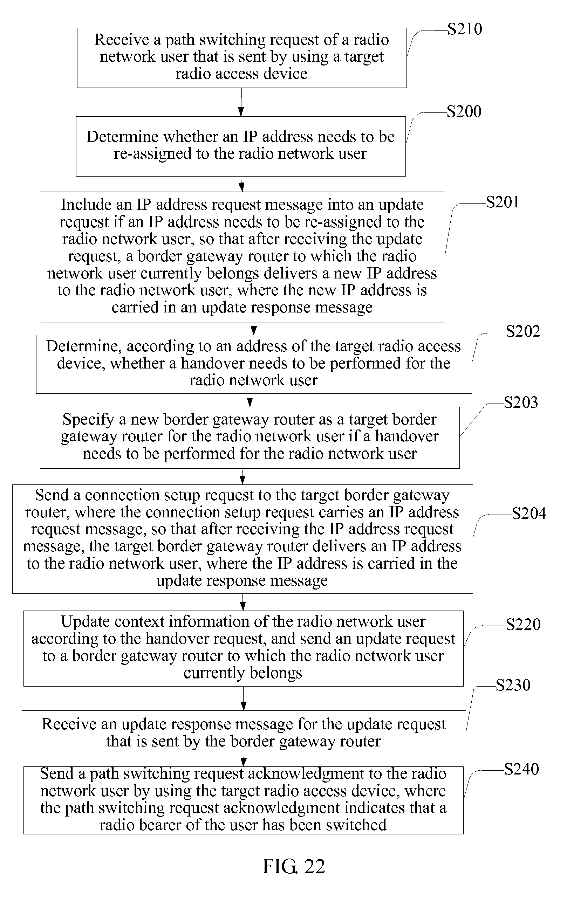

As shown in FIG. 22, an embodiment of the present invention further provides a method for processing a radio network user handover, including:

S210: Receive a path switching request of a radio network user that is sent by using a target radio access device.

S220: Update context information of the radio network user according to the handover request, and send an update request to a border gateway router to which the radio network user currently belongs, to instruct the border gateway router to update a data bearer forwarding policy of the user, and send a data bearer of the user to the target radio access device.

S230: Receive an update response message for the update request that is sent by the border gateway router.

S240: Send a path switching request acknowledgment to the radio network user by using the target radio access device, where the path switching request acknowledgment indicates that a radio bearer of the user has been switched.

In an embodiment, after step S210, the method further includes:
S200: Determine whether an IP address needs to be re-assigned to the radio network user.
S201: Include an IP address request message into an update request if an IP address needs to be re-assigned to the radio network user, so that after receiving the update request, the border gateway router to which the radio network user currently belongs delivers a new IP address to the radio network user, where the new IP address is carried in the update response message.

Further, in an embodiment, after step S210, the method further includes:
S203: Determine, according to an address of the target radio access device, whether a handover needs to be performed for the radio network user.
S204: Specify a new border gateway router as a target border gateway router for the radio network user if a handover needs to be performed for the radio network user.
S205: Send a connection setup request to the target border gateway router, where the connection setup request carries an IP address request message, so that after receiving the IP address request message, the target border gateway router delivers an IP address to the radio network user, where the IP address is carried in the update response message.

In an embodiment, the method further includes:
negotiating the bearer forwarding policy of the user with the target border gateway router, and formulating a bearer forwarding policy of the user according to a topology condition of a current network and a condition of the radio network user; and
delivering the new bearer forwarding policy of the user to the target border gateway router or the target radio access device.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

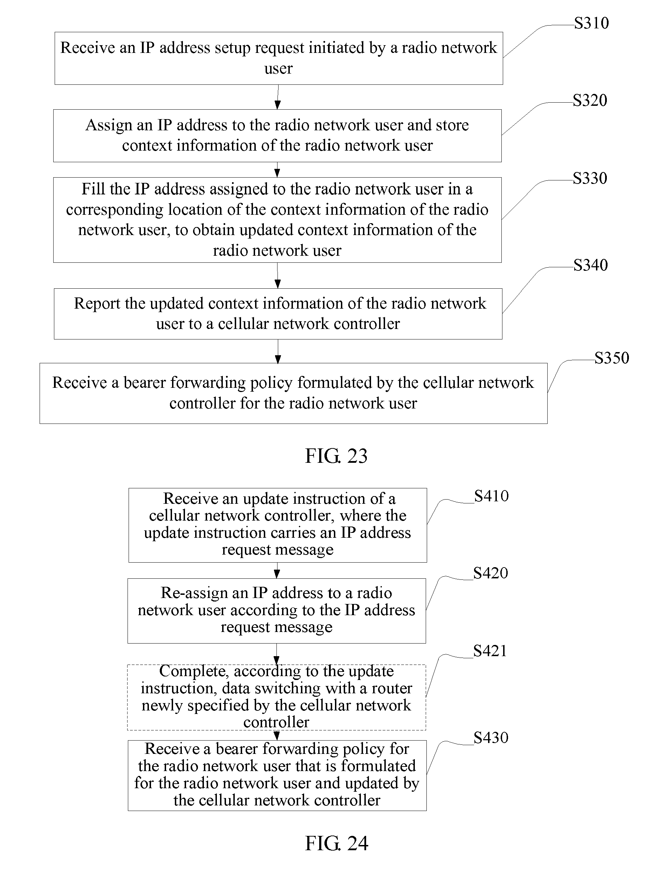

As shown in FIG. 23, an embodiment of the present invention further provides a method for processing network access of a radio network user, including:
S310: Receive an IP address setup request initiated by a radio network user.
S320: Assign an IP address to the radio network user and store context information of the radio network user.
S330: Fill the IP address assigned to the radio network user in a corresponding location of the context information of the radio network user, to obtain updated context information of the radio network user.
S340: Report the updated context information of the radio network user to a cellular network controller, so that the cellular network controller formulates a bearer forwarding policy for the radio network user according to the updated context information of the radio network user.
S350: Receive the bearer forwarding policy formulated by the cellular network controller for the radio network user.

As shown in FIG. 24, an embodiment of the present invention further provides a method for processing a radio network user handover, including:
S410: Receive an update instruction of a cellular network controller, where the update instruction carries an IP address request message, and the update instruction is sent by the cellular network controller when updating context information of the radio network user after the cellular network controller receives a handover request of the radio network user.
S420: Re-assign an IP address to the radio network user according to the IP address request message.
S430: Receive a bearer forwarding policy for the radio network user that is formulated for the radio network user and updated by the cellular network controller, where the updated bearer forwarding policy for the radio network user formulated for the radio network user is a new bearer forwarding policy formulated by the cellular network controller for the radio network user according to a topology condition of a current network and a condition of the radio network user.

In an embodiment, after S420, the method further includes:
S421: Complete, according to the update instruction, data switching with a router newly specified by the cellular network controller.

It should be noted that, the cellular network controller mentioned in this embodiment of the present invention may also be referred to as a Single network controller, which has a function of an openradio controller and a function of an openflow controller.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

### Application Embodiment 1

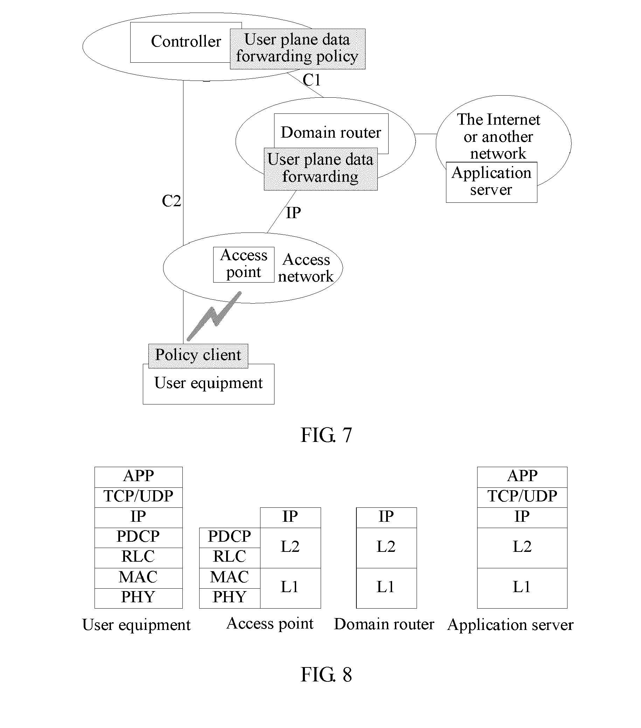

In an embodiment, a specific application scenario of a network architecture may be shown in FIG. 7. With reference to the application scenario in FIG. 7, each network entity is described in detail in the following.

It should be noted that in the following embodiment, a controller mentioned is a cellular network controller, where the controller has two functions, which are a function of an openradio controller and a function of an openflow controller.

The network architecture shown in FIG. 7 includes three parts: a core network, a radio access network (RAN), and a user terminal. In this embodiment, there is no special requirement on network elements on the RAN and inside the RAN, such as a controller (controller) and an AP, and much modification is performed on the core network.

The network architecture includes three main functional entities: a controller (Controller), a border gateway router GR (GR, Gateway Router), and a policy client. The controller and the border gateway router are located in the core network, and the policy client is located inside a UE.

In an embodiment, the Controller may process various requests from a user or a network, and make a control decision according to information about the requests. In an embodiment, an instance of a request may be a handover request of a user; in an embodiment, an instance of a request may also be a radio bearer setup request of a user.

In an embodiment, the Controller is a main control plane network element and has control plane functions of an IP layer and upper layers of the IP layer. The Controller may process a radio bearer setup request or a handover request from a user or an access network (from a user in this embodiment); apply a processing result to formulating of a decision on a bearer forwarding policy of the user, to decide on the bearer forwarding policy of the user; and deliver the bearer forwarding policy of the user to a policy executing entity (which is the GR in this embodiment).

In an embodiment, a C1 interface controls the bearer forwarding policy of the user, which may be construed to be equal to an OF Controller function, and a C2 interface controls radio bearer setup (non-IP) or a handover. The C1 interface and the C2 interface relate to each other. For example, a handover of a UE may trigger updating of a control policy.

Optionally, in an embodiment, the Controller is further configured to perform some common functions, such as receiving a feedback of the GR; collecting information such as a network topology and a user state; assigning an IP address; performing authorization and authentication; and managing a session (session).

In an embodiment, the GR is configured to receive the bearer forwarding policy of the user that is delivered by the Controller, and perform packet forwarding on a data plane according to the bearer forwarding policy of the user. The GR is a user plane network element, has user plane processing functions of an IP layer and upper layers of the IP layer, and is located on a domain edge. The GR is a domain border gateway, and the GR is passed through during interaction with an extranet (such as the Internet). Different access standards may be connected to different GRs, and the GRs are interconnected to implement interworking. Optionally, the GR further has some common functions, such as functions of managing, maintaining, and delivering an IP address.

In an embodiment, the GR is further configured to report bearer context information (such as information about a session newly created by the user) to the controller, to perform IP address assignment, management, maintenance, and delivery for the user terminal.

In an embodiment, the GR may be deployed at a network layer unrelated to a location.

To implement separation between the user plane and the control plane, cooperation of the terminal is required. Therefore, in an embodiment, a policy client may be disposed on the terminal, where the policy client is configured to perform signaling interworking with the controller, and report, to the controller, real-time session information of an access user, such as an IP address change of the user terminal and a handover of the terminal.

In an embodiment, if a user uses a video service, the user sets up a session to transfer video data.

An interface between the Controller and the GR, that is, the C1 interface, may be used to transmit the bearer forwarding policy delivered by the Controller to the GR, including a policy such as a routing forwarding policy or a UE handover policy. Through the C1 interface, a relationship between the Controller and the GR is similar to that between an OF controller and an OF switch in OpenFlow; and the C 1 interface may be implemented by referring to OF, or may refer to another similar technology in the future, which is not specially limited in this embodiment of the present invention.

An interface between the Controller and the policy client, that is, the C2 interface, may be used to transfer control information delivered by the Controller to the policy client, where the control information mainly refers to a related control message that may affect formulating, updating, and deleting of the forwarding policy, such as signaling of user state updating and signaling of a handover request caused by a user location change. The Controller applies a processing result of the information to a decision on the bearer forwarding policy of the user.

An interface between the GR and the policy client is an IP-based interface and mainly transmits a data plane packet.

According to the communications network architecture including the foregoing functional entities and interfaces, separation between the control plane and the data plane can be implemented. In this embodiment, implementation principles and main characteristics of the control plane and the user plane are as follows:

A core network user plane uses an ALL-IP architecture and mainly includes a GR gateway deployed on a network edge, where the GR is responsible for IP forwarding, but a forwarding policy is controlled by the Controller; and the GR is further responsible for managing and assigning an IP address during user terminal access.

A core network control plane mainly includes a functional entity Controller, which is responsible for generating and managing an IP forwarding policy, and performing signaling interworking with a UE to collect real-time information on the UE, where the information is applied to a decision on a bearer forwarding policy of a user. An object herein of the forwarding policy mainly refers to an IP packet, and a specific form of the forwarding policy is similar to a flow table form in OF. In an embodiment, the core network control plane further includes a policy client.

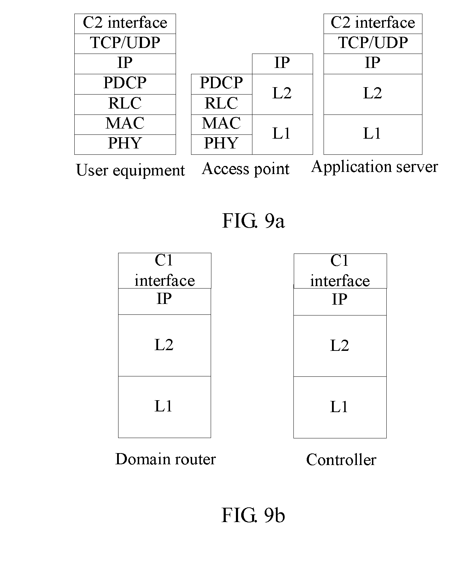

In this embodiment, a user plane protocol stack and a control plane protocol stack are respectively shown in FIG. 8 and FIG. 9 (including FIG. 9a and FIG. 9b). An AP refers to a data plane/control plane network element in an existing wireless network in general, and is not limited to an access device such as a base station or an access point.

It may be learned by comparing FIG. 8 and FIG. 2 that, in this embodiment of the present invention, the user plane protocol stack is simplified; from a perspective of network elements that are passed through, the data plane includes only an access network and a GR in this solution of the present invention, so that the number of hops passed through by a packet is decreased; and from a perspective of a packet bearer layer, a complex tunnel operation such as the GTP is no longer required in this solution of the present invention, and an intermediate network element of a packet only needs to have an IP packet processing capability. In this embodiment of the present invention, the data plane does not impose any new requirement on a network element, but simplifies a function of the network element.

According to FIG. 9a and FIG. 9b, in this embodiment of the present invention, the control plane includes signaling interworking between the UE and the Controller and signaling interworking between the GR and the Controller, where the former is carried by the C2 interface, and the latter is carried by the C1 interface. Signaling carried by the C2 interface mainly refers to related signaling that may affect formulating, updating, and deleting of a forwarding policy, such as signaling of user state updating and signaling of a handover request of the UE. An operation such as authorization and authentication between the UE and the core network can be performed by merely using the prior art. The signaling of the C2 interface is carried on TCP/IP; signaling of the C1 interface is carried on IP; and the signaling of the C1 interface carries information such as a forwarding policy.

Some basic procedures related to the solution in this embodiment of the present invention are mainly as follows:

### 1. Bearer setup

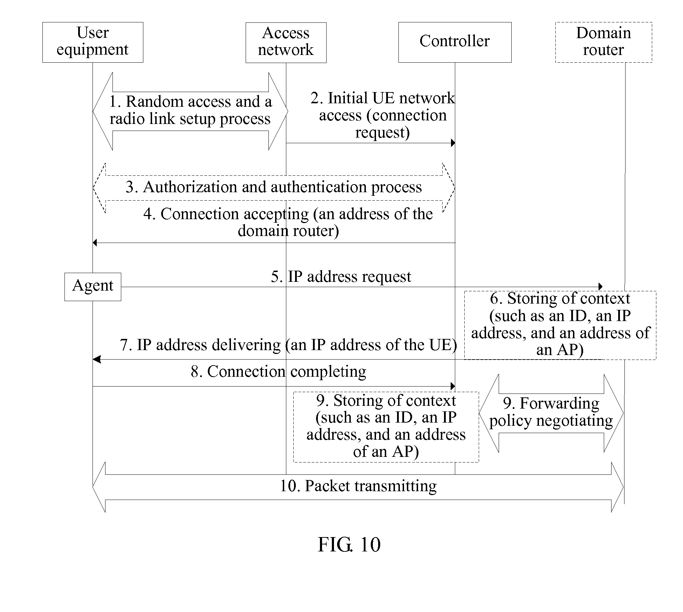

An objective of bearer setup is to set up a data path channel, and context information of a UE is retained on nodes that are passed through during a packet transmission process, to forward a packet according to the context information. In this embodiment, a bearer setup procedure is shown in FIG. 10.

A radio access network (RAN, Radio Access Network) is a part of a mobile communications network and connects a mobile device and a core network by using an access technology. For example, an access network of a GSM network is a GRAN, an access network of a UMTS network is a UTRAN, and an access network of an LTE network is an E-UTRAN. In this solution, no substantial modification is performed to an access network part of an existing wireless network in an operation that relates to an access network. Therefore, in the following description, the access network is used to refer to a related network element in general, and network elements of the access network are not specifically described one by one.

Step 1: A UE accesses a network and performs random access and a radio link setup process with an access network.

Step 2: The access network sends a network access message of the UE to a Controller, where the network access message of the UE may include identifier information of the UE and related information of the access network, so that the Controller identifies the UE and an access location of the UE; and in an embodiment, the related information of the access network includes information such as an access network standard and a base station message.

Step 3: The UE and the Controller perform an authorization and authentication process, and merely the prior art is used during this process.

Step 4: The Controller specifies a GR for the UE according to an identifier of the UE and a location of the UE during network access and with reference to network topology information, a forwarding policy, and the like that are stored in the controller; and delivers an address of the GR to the UE. The address of the GR herein may be an IP address, or may be another piece of information that enables the UE to find the GR. The Controller includes the address into an attach response message and delivers the message to the UE; and then, a radio bearer setup process is performed between the UE and the access network, and the prior art may be used during the radio bearer setup process herein.

Steps 5 to 6: The UE initiates an IP address setup request (that is, an IP address assigning request, such as a DHCP (Dynamic Host Configuration Protocol, Dynamic Host Configuration Protocol) request) to the GR, where the request is triggered by a policy client in the UE, and another component in the UE may not perceive this process. After receiving this request, the GR assigns an IP address to the UE and locally stores context information.

Step 7: The GR sends an IP address delivering message to the UE, where the message carries the IP address assigned by the GR to the UE.

Step 8: The UE sends an attach complete message to the Controller.

Step 9: The GR updates a context of the UE and sends the context to the Controller, and updates information such as an IP address into the context of the UE that is stored in the Controller. In this step, the Controller and the GR may further negotiate a bearer forwarding policy for the UE, that is, the Controller specifies a packet forwarding policy for the UE and delivers the policy to the GR. For example, some default bearer forwarding policies may be directly delivered. In an embodiment, a default bearer forwarding policy may be a forwarding policy in which routing is performed by default, such as a policy of forwarding from a default port of the GR to the Internet.

Step 10: Perform a normal packet transmission process after bearer setup.

In the foregoing steps, step 9 and step 10 are not strictly sequential.

In an embodiment, the IP address of the UE may also be assigned in another manner, for example, a DHCP manner, or the IP address is assigned by the access network. In this way, the UE may directly request, in a manner similar to a manner in Step 5 and Step 7, an IP address from a server that assigns an IP address. After obtaining the IP address, the UE needs to update the IP address into at least one of the controller and the GR. If the IP address is updated into only one of the controller and the GR, "the one" is responsible for updating the IP address into the other.

It should be noted that, the foregoing bearer setup process is merely one possibility of bearer setup, and in this embodiment, the bearer setup process may also have many other possibilities. As long as operations that the Controller specifies the GR for the UE, and the UE, the GR, and the controller all learn the IP address of the UE can be completed to set up a channel between a control plane and a data plane, all these operations may be used as a proper bearer setup process in this embodiment and are not specially limited in this embodiment of the present invention. A data path of the data plane is set up during the foregoing bearer setup process, to prepare for packet forwarding.

### 2. Mobility management

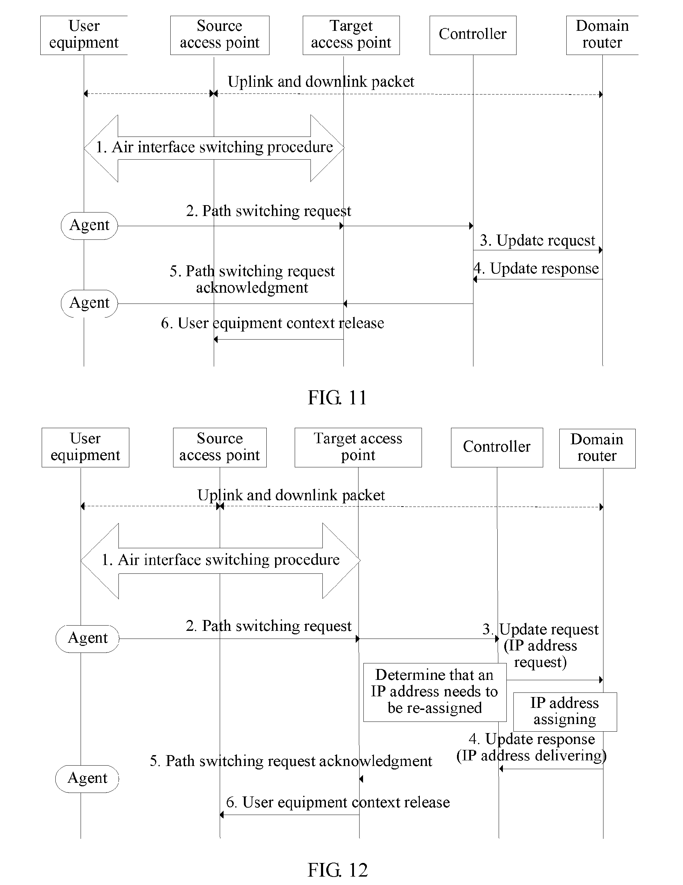

Mobility management mainly includes a handover procedure, and the handover procedure may be divided into the following three cases according to a size of a movement range of a UE, where handover procedures in the three cases are shown in FIG. 11 to FIG. 13 respectively.

### 1) Inter-AP handover (an IP address is unchanged)

In this scenario, only an address of a base station (AP) on an access network changes, but an IP address is unchanged, and therefore, only an address (or an identifier) of a current base station needs to be updated in a Controller and a GR. Meanings of steps shown in FIG. 11 are as follows:

Step 1: Initially, a packet is transmitted by using a source base station, and a UE needs to be handed over between base stations because the UE moves; therefore, an air interface switching procedure is performed among the UE, the source base station, and a target base station. This step may be implemented by using the prior art.

Step 2: The UE sends a path switching request to the Controller by using the target base station, and the UE or the target base station may directly include an identifier or an address of the target base station into this message. If the UE performs this operation, this operation of including is performed by a policy client in the UE; and the address of the target base station may not be directly carried in a handover request message, but the GR determines the address of the target base station according to a source address in this message.

Steps 3 to 4: After receiving the message, the Controller updates a context of the UE in the Controller, and sends an update request to a current GR of the UE at the same time, and the GR makes a response; and if the Controller decides, after updating the address of the base station, that a forwarding policy corresponding to the UE needs to be updated, in the two steps, the Controller and the GR update the forwarding policy at the same time.

Step 5: The Controller sends a path request acknowledgment to the UE by using the target base station.

Step 6: The target base station sends a context release request to the source base station, and the source base station releases a context related to the UE.

### 2) Inter-RAT handover (an IP address has changed)

In some scenarios, a handover process during which an IP address needs to be updated may occur. For example, when a UE sends inter-access-technology switching, a GR may need to re-assign an IP address to the UE (when an IP address is assigned in another manner, a corresponding server re-specifies an IP address for the UE), and in this scenario, a handover procedure is shown in FIG. 12.

In this scenario, because the IP address has changed, a base station needs to be updated ,the IP address needs to be updated to a new IP address in a Controller, and the GR needs to re-specify an IP address for the UE; and meanings of steps are as follows:

Steps 1 to 2: are the same as those in FIG. 11, and the only difference is that a target base station and a source base station in this scenario may belong to different access technologies.

Steps 3 to 4: In addition to completing updating and a policy negotiation function in steps 3 to 4 in FIG. 11, in this scenario, after receiving a path switching request sent by the UE, the Controller determines, according to an address of the target base station or an address of a target AP, that an IP address needs to be re-assigned to the UE. In this case, the Controller includes an IP address request message into an update request; and after receiving this message, the GR delivers a new IP address to the UE, and sends an update response message that includes the new IP address to the Controller.

Steps 5 to 6: are the same as those in FIG. 11.

In this scenario, if the IP address is not assigned by the GR, the Controller needs to request an IP address for the UE from a server assigning an IP address, such as a DHCP server, updates this new IP address and a new forwarding policy into the GR, and returns the new IP address to the UE.

### 3) Inter-GR handover (an IP address has changed)

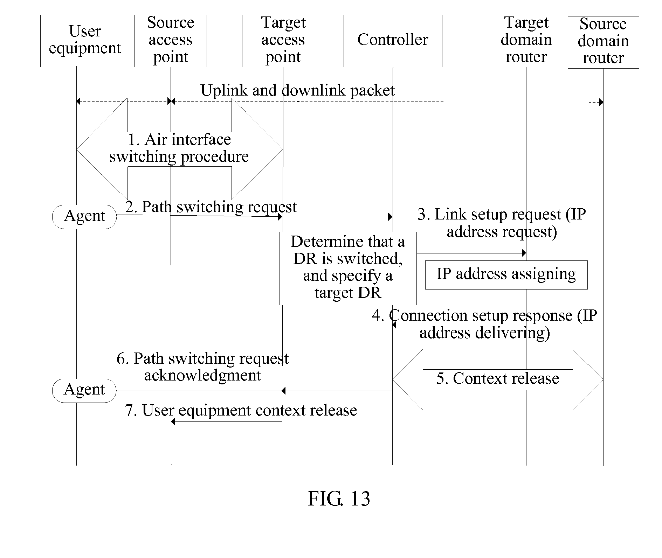

When a movement range of a UE is further extended, a GR to which the UE belongs may be switched. In this case, a procedure is shown in FIG. 13:

In this scenario, a Controller needs to determine that a GR needs to be switched, and triggers operations, for example, a target GR assigning an IP address and a source GR releasing a context; and meanings of steps are as follows:

Steps 1 to 2: are the same as those in FIG. 12.

Steps 3 to 4: In this scenario, after receiving a path switching request sent by the UE, the Controller determines, according to an address of a target base station or an AP, that the GR of the UE needs to be switched. In this case, the Controller specifies a new GR for the UE, and sends a connection setup request to the target GR, where the request carries an IP address request message. After receiving the message, the target GR delivers an IP address to the UE, and sends an update response message that carries the IP address to the Controller. During this process, the Controller and the target GR may negotiate a forwarding policy, and the Controller specifies a new forwarding policy according to a current topology condition and a UE condition and delivers the new forwarding policy to the target GR.

Step 5: The Controller and the source GR perform a context release procedure, and the context herein includes UE information, a forwarding policy, and the like. Certainly, the Controller may also decide that the source GR temporarily saves the context, and the Controller triggers the context release process when necessary.

Steps 6 to 7: are the same as steps 5 to 6 in FIG. 12.

In this scenario, if the IP address is not assigned by the GR, the Controller needs to request an IP address for the UE from a server assigning an IP address, such as a DHCP server, updates this new IP address and a new forwarding policy into the target GR, and returns the new IP address to the UE.

In the scenario shown in FIG. 13, switching between GRs is triggered by a movement of the UE, but actually, switching of the GRs may also be triggered by other reasons, such as user service switching and network load balancing. Whichever reason triggers the switching, a core procedure of the switching of the GRs is shown in step 3 to step 5 in FIG. 13, and scenarios are not described one by one herein again.

The procedure in this embodiment mainly focuses on a scenario in which the IP address of the UE is assigned by the GR, and actually, the IP address of the UE may also be assigned in another manner. For example, the IP address is assigned in a DHCP manner or is directly assigned by an access network. When the IP address of the UE is assigned by the access network, a bearer setup procedure and a handover procedure of the access network are described in a next embodiment in detail. A procedure of this embodiment is similar to that of the next embodiment, and therefore is not described again.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

In this embodiment of the present invention, a new wireless network architecture is provided by separating control from a bearer, which implements an SDN (Software Defined Network, software defined network) of a wireless network, thereby completing mobility management optimization.

### Application Embodiment 2

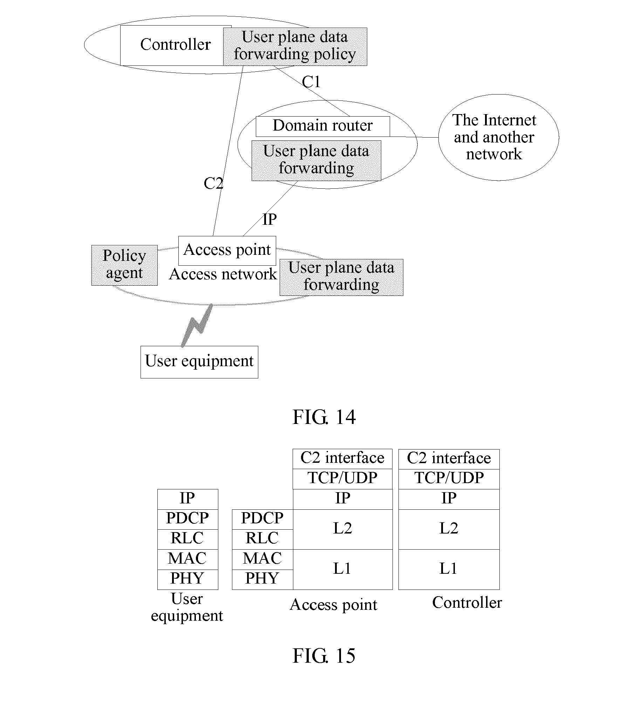

In an embodiment, a specific application scenario of a network architecture may be shown in FIG. 14. With reference to the application scenario in FIG. 14, each network entity is described in detail in the following.

A difference between the application scenario of the network architecture provided in FIG. 14 and the scenario provided in FIG. 7 is that in this application scenario, there is no requirement on a terminal, and an access network needs to be capable of accepting control of data forwarding policies of a control plane and a user plane. In this embodiment, basic functions of a communications network, bearer management, and mobility management are implemented through cooperation between a Controller, a GR, and the access network.

In this embodiment, functions of the Controller and the GR are the same as those in Embodiment 1. A UE is a common UE and does not need to have functions such as a policy triggering function. Correspondingly, some of the functions are applied to the access network, that is, cooperation of the access network is required to implement separation between the user plane and the control plane. Therefore, a user plane data forwarding agent is set on the access network, and is responsible for performing signaling interworking with the Controller and reporting real-time session information of an access user, such as an IP address change of a user terminal and a handover of a terminal.

In an embodiment, if a user uses a video service, the user sets up a session to transfer video data.

Therefore, in this embodiment, a radio bearer setup request or a handover request processed by the Controller mainly comes from the access network.

Optionally, the access network may also receive a bearer forwarding policy of a user that is delivered by the Controller, and routes a packet according to the bearer forwarding policy of the user. For example, when a user session changes or is switched, the Controller may decide to offload some services of the user to another access standard. In this case, the Controller delivers the bearer forwarding policy of the user to the access network, and routes packets corresponding to the services according to a path different from an existing path. After receiving the delivered bearer forwarding policy of the user, the access network routes the packets according to the policy.

As described above, it is required to modify an access network part of an existing wireless network to implement the foregoing functions, that is, a functional entity needs to be added to the access network. Adding a functional entity to the access network herein includes the following cases:
1. All functions of the functional entity are located in a network element of the access network. For example, the functions are located in an access point AP.
2. All functions of the functional entity are divided and distributed on different network elements of the access network. For example, some of the functions are located in an AP, and the other functions are located in a controller.
3. Different network elements in the access network have some or all of functions of the functional entity, but mutual cooperation between the network elements is required to complete a function. For example, both an AP and a controller have function 1 and function 2, but cooperation between the AP and the controller is required to complete function 1 and function 2.
4. Another form: With development of a future wireless network, a network element in the access network may also evolve and change, the functional entity may change with the access network, and a function location of the functional entity changes correspondingly.

According to the description above, in this embodiment, in the second, third, and fourth forms in presentation (product) forms of the functional entity newly added to the access network, the entire access network may be considered as a black box, and regardless of distribution of various functions in the access network, it is only required that the entire access network complete the functions. All of the foregoing four presentation forms have no substantial effect on the solution in this embodiment, and therefore, only an example in which the added functional entity is located in an AP is used for description following this embodiment. When the functional entity exists in another form, a principle and a procedure are similar and are not described again.

When the functional entity newly added to the access network is located in an AP, main functions of the AP are as follows: sending an event to the Controller according to an instruction of the Controller when a specific event such as a handover or initiating a new session occurs in a specific UE, so that the Controller applies information about the event to formulating of a control policy; and receiving a response of the Controller and completing a specific action for the UE, such as AP bearer switching during a UE handover.

Optionally, the AP may also receive a data plane control policy delivered by the Controller, and route a packet according to this policy (a function of an OF switch).

In the communications network architecture in this embodiment, separation between the control plane and the data plane can be implemented, and an implementation principle and main characteristics of the control plane/user plane are basically the same as those in Application Embodiment 1; and a difference is that on the control plane, an agent on the access network instead of the UE performs signaling interworking with the Controller, while on the data plane, the access network receives forwarded data and the UE does not need to perceive existence of control.

In this embodiment, a data plane protocol stack and a protocol stack of a C1 interface on the control plane are the same as those in FIG. 8 and FIG. 9b in Application Embodiment 1, and a protocol stack of a C2 interface is shown in FIG. 15. The C2 interface carries the OpenRadio protocol, and an implementation manner of the OpenRadio protocol is similar to that of the OpenFlow protocol.

In this embodiment, if an IP address of the UE is assigned by the GR, a bearer setup procedure and a mobility management procedure are basically the same as those in Application Embodiment 1, and a difference is that in these procedures, an operation that needs to be triggered by a policy client in Application Embodiment 1 is triggered by the access network in this embodiment. Other steps are the same as those in Application Embodiment 1 and are not described herein again.

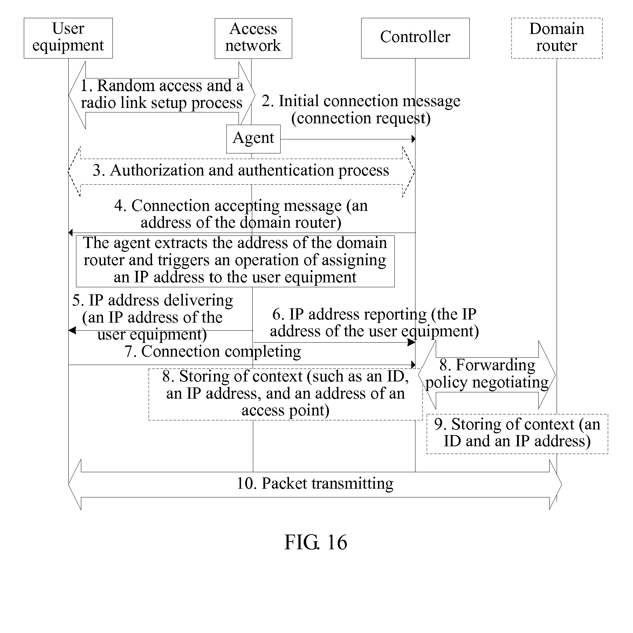

In addition, in this embodiment, the IP address of the UE may also be assigned by the functional entity newly added to the access network. Using that the newly added functional entity is located in an AP as an example, a bearer setup procedure and a handover procedure are shown in FIG. 16.

### Bearer setup

FIG. 16 is a bearer setup flowchart according to an embodiment of the present invention.

Meanings of steps are as follows:
Steps 1 to 3: are the same as step 1 to step 3 in FIG. 10.
Step 4: is similar to step 4 in FIG. 10, and a difference is that when a Controller delivers an attach response message that carries an address of a GR, an agent (agent) on a base station extracts the address of the GR and does not need to deliver the address of the GR to a UE. At the same time, a base station triggers an operation of assigning an IP address to the UE. The triggering herein includes triggering the base station itself to assign an IP address to the UE, and also includes triggering another base station or another network element on an access network to assign an IP address to the UE.
Steps 5 to 6: The Agent in the base station delivers the IP address to the UE and reports the IP address to the Controller, where step 5 and step 6 are not strictly sequential.
Step 7: The UE sends an attach complete message to the Controller.
Step 9: The Controller stores a context of the UE, and at the same time, the Controller and the GR may further negotiate a forwarding policy for the UE, that is, the Controller specifies a packet forwarding policy for the UE and delivers the policy to the GR. For example, some default forwarding policies may be directly delivered; and this step is optional.
Step 9: Store, in the GR, context information such as the IP address of the UE and the forwarding policy. It should be noted that this step is optional and may also be omitted in an embodiment.
Step 10: Perform a normal packet forwarding process after bearer setup.

The IP address of the UE may also be assigned in another manner, for example, a DHCP manner, or the IP address is assigned by the GR.

It should be noted that, the foregoing bearer setup process is merely one possibility of bearer setup, and in this embodiment, the bearer setup process may also have many other possibilities. As long as operations that the Controller specifies the GR for the UE, and the UE, the GR, and the controller all learn the IP address of the UE can be completed to set up a channel between a control plane and a data plane, all these operations may be used as a proper bearer setup process in this embodiment. A data path of the data plane is set up during the foregoing bearer setup process, to prepare for packet forwarding.

### Mobility management

A handover procedure may be divided into the following three cases according to a size of a movement range of a UE.

### 1) Inter-AP handover (an IP address is unchanged)

In this scenario, an AP is switched but some base stations do not have a capability of assigning an IP address, and therefore, an IP address change of a UE is not involved. In this case, a handover procedure is basically similar to the procedure shown in FIG. 11, and a difference is that a path switching request is triggered by an agent in a base station, instead of the UE, which is not described herein again.

### 2) Inter-RAT/AP handover (an IP address has changed)

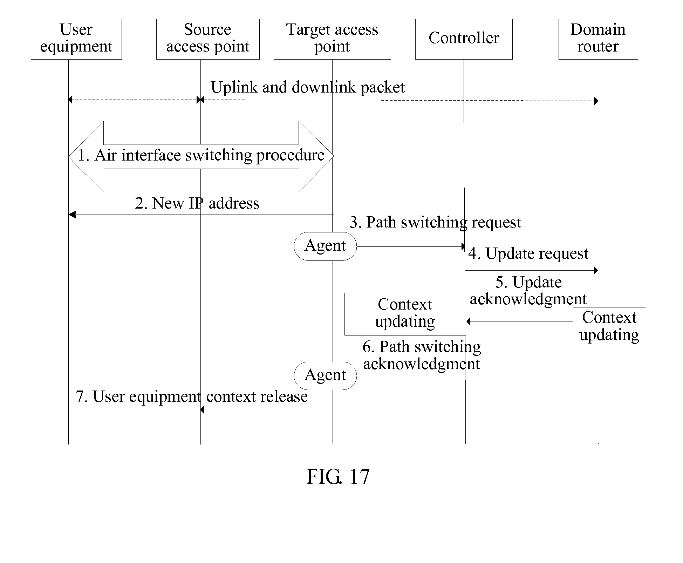

In some scenarios, an inter-AP/RAT handover of a UE causes an IP address change of the UE, and a handover procedure is shown in FIG. 17.

In this scenario, a Target AP may determine by itself that a new IP address needs to be assigned to the UE, and therefore, a focus of the entire procedure is updating the new IP address into a Controller and a GR; and meanings of steps are as follows:
Step 1: is the same as that in FIG. 12.
Step 2: The target AP determines by itself that a new IP address needs to be assigned to the UE, and delivers the IP address to the UE.
Steps 3 to 6: An Agent in the target AP sends a path switching request to the Controller, to trigger an operation of updating an IP address into the Controller. After receiving the message, the Controller initiates an update operation to a corresponding GR. Optionally, in this case, a control policy on a data plane may be updated at the same time. After updating a local context, the GR makes a response to the Controller; and the Controller updates a local context related to the UE and the Controller returns a path switching acknowledgment message to the target AP.
Step 7: The target AP triggers a source AP to release the context of the UE.

In this scenario, if the IP address is not assigned by the AP, the Controller or the target AP needs to request an IP address for the UE from a server assigning an IP address, such as a DHCP server, sends this new IP address and a new forwarding policy to the GR, and returns the new IP address to the UE.

### 3) Inter-GR handover (an IP address has changed)

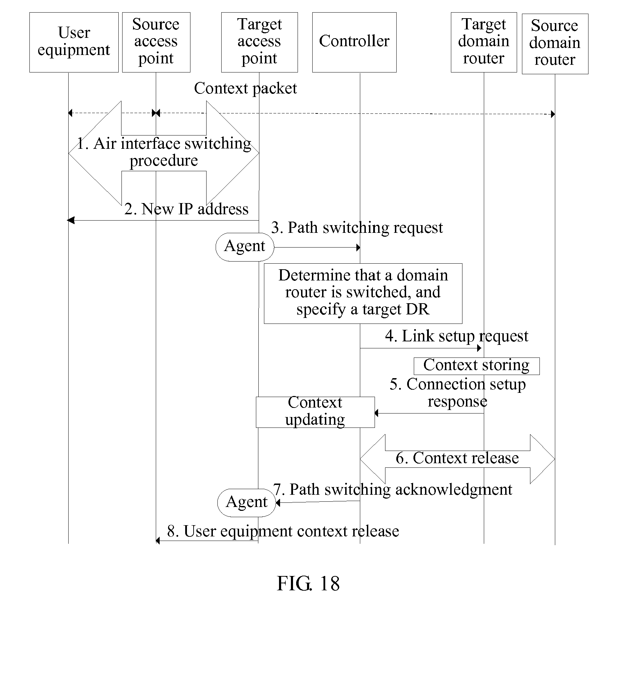

When a movement range of a UE is further extended, a GR to which the UE belongs may be switched. In this case, a procedure is shown in FIG. 18:

In this scenario, a Controller needs to determine that a GR needs to be switched, and triggers operations, for example, a target GR storing a context and a source GR releasing the context; and meanings of steps are as follows:
Steps 1 to 3: are the same as step 1 to step 3 in FIG. 17.
Steps 4 to 5: After receiving a path switching request, the Controller determines, according to an address of a target base station or a new IP address of the UE, that the GR of the UE needs to be switched. In this case, the Controller specifies a new GR for the UE and sends a connection setup request to the target GR. After receiving the message, the target GR stores a context related to the UE and returns a response message to the Controller. At the same time, during this process, the Controller and the target GR may negotiate a forwarding policy, and the Controller specifies a new forwarding policy according to a current topology condition and a UE condition and delivers the new forwarding policy to the target GR.
Step 6: The Controller and the source GR perform a context release procedure, and the context herein includes UE information, a forwarding policy, and the like. Certainly, the Controller may also decide that the source GR temporarily saves the context, and the Controller triggers the context release process when necessary.
Steps 7 to 8: are the same as steps 6 to 7 in FIG. 17.

In this scenario, if the IP address is not assigned by the AP, the Controller or the target AP needs to request an IP address for the UE from a server assigning an IP address, such as a DHCP server, sends this new IP address and a new forwarding policy to the GR, and returns the new IP address to the UE.

In the scenario shown in FIG. 18, switching between GRs is triggered by a movement of the UE, but actually, switching of the GRs may also be triggered by other reasons, such as user service switching and network load balancing. Whichever reason triggers the switching, a core procedure of the switching of the GRs is shown in step 3 to step 7 in FIG. 18, and scenarios are not described one by one herein again.

The procedure in this embodiment mainly focuses on a scenario in which the IP address of the UE is assigned by an access network, particularly by the AP, and actually, the IP address of the UE may also be assigned in another manner. For example, the IP address is assigned by the GR (this procedure is provided in Application Embodiment 1), assigned in a DHCP manner, or is directly assigned by the access network.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

In this embodiment of the present invention, a new wireless network architecture is provided by separating control from a bearer, which implements an SDN (Software Defined Network, software defined network) of a wireless network, thereby completing mobility management optimization.

### Application Embodiment 3

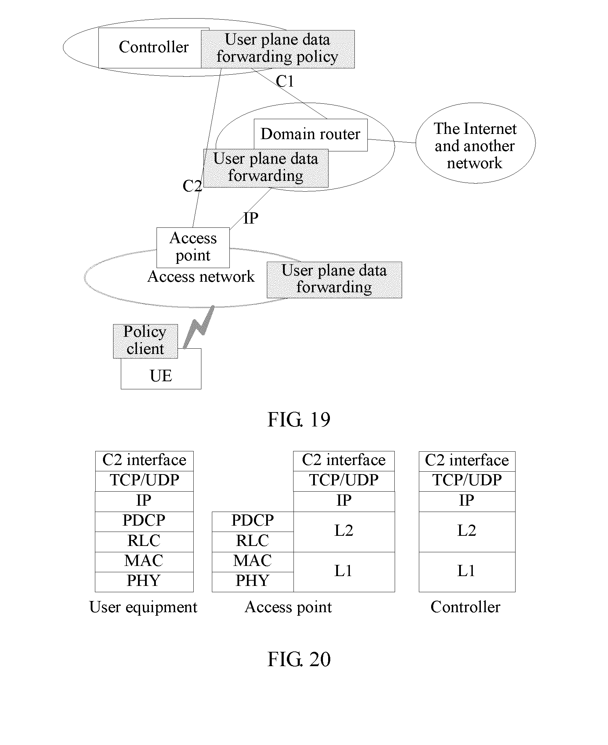

An application scenario instance of a network architecture in this embodiment is shown in FIG. 19.

A difference between this embodiment and the foregoing two embodiments is that, basic functions of a communications network, bearer management, and mobility management are implemented through cooperation between four entities, which are a terminal, an access network, a GR, and a Controller. In this embodiment, when the Controller delivers a bearer forwarding policy of a user to a policy executing entity, the policy executing entity may also include a network element in the access network, such as an AP.

In this embodiment, based on ALL IP, a core network deploys, on a network edge of a user plane, a GR gateway that accepts control of a forwarding policy, to extract a control plane Controller function that implements a forwarding policy; and implements wireless network mobility management and bearer management through signaling control with a terminal or an access network. For details about functions and procedures of functional entities, refer to Embodiment 1 and Embodiment 2, and a step that needs to be triggered by a client may be triggered by a policy client in the UE, or may be triggered by an agent in the access network.

In this embodiment, a C1 interface is implemented based on the OpenFlow standard, and a data plane protocol stack and a protocol stack of the C1 interface on a control plane are the same as those in FIG. 8 and FIG. 9b in Embodiment 1. A protocol stack of a C2 interface is shown in FIG. 20, the C2 interface carries the OpenRadio protocol, and an implementation manner of the OpenRadio protocol is similar to that of the OpenFlow protocol.

In this embodiment of the present invention, a cellular network controller formulates a bearer forwarding policy of a handover user according to a result of processing a wireless handover request from a radio network user or a radio network access network, pre-stored event information, and a processing result reported by the wireless protocol processing module, so that the cellular network controller has a routing control plane function. In addition, two policy executors, a border gateway router and a radio access device, have a routing function; and the cellular network controller delivers the formulated bearer forwarding policy of the handover user to a switching policy executor corresponding to the handover user for executing, and implements a wireless mobility management function by using routing of a control policy executor. Further, the cellular network controller centrally formulates the bearer forwarding policy, and the two policy executors, the border gateway router and the radio access device, retain the routing function. Therefore, in the present invention, complete separation between a control plane and a data plane is implemented, an overall network architecture is simplified, and network elements in a core network are decreased; and the control plane is centralized in the cellular network controller, which reduces signaling negotiation among multiple control entities, thereby reducing waste of network resources. Further, in the foregoing solution, the data plane is carried on IP, and a GTP tunnel in an existing wireless communications network is canceled, thereby reducing complexity of protocol stack processing and packet processing that is increased due to introduction of a GTP tunnel.

In this embodiment of the present invention, a new wireless network architecture is provided by separating control from a bearer, which implements an SDN (Software Defined Network, software defined network) of a wireless network, thereby completing mobility management optimization.

A person of ordinary skill in the art may understand that all or some of the procedures of the methods in the embodiments may be implemented by a computer program instructing relevant hardware. The program may be stored in a computer readable storage medium. When the program runs, the procedures of the methods in the embodiments are performed. The foregoing storage medium may include: a magnetic disc, an optical disc, a read-only memory (Read-Only Memory, ROM), or a random access memory (Random Access Memory, RAM).

The foregoing are merely several embodiments of the present invention. A person skilled in the art may make various modifications and variations to the present invention without departing from the spirit and scope of the present invention.

## Claims

1. A cellular network controller, comprising:
a wireless protocol processing module, configured to process a wireless handover request from a radio network user or a radio network access network, and report a processing result;
a policy control module, configured to formulate a bearer forwarding policy of a handover user according to event information pre-stored in the cellular network controller and the processing result reported by the wireless protocol processing module; and
a policy delivering module, configured to deliver the bearer forwarding policy formulated by the policy control module to a policy executor corresponding to the handover user for executing, so that a packet sent to the handover user is forwarded according to the bearer forwarding policy.

2. The cellular network controller according to claim 1, wherein the cellular network controller further comprises:
a first setup module, configured to: if the policy executor is a border gateway router GR, set up a control relationship with the GR based on the OpenFlow protocol.

3. The cellular network controller according to claim 1, wherein the cellular network controller further comprises:
a second setup module, configured to: if the policy executor is a radio network access device, set up a control relationship with the radio network access device based on the OpenRadio protocol and the OpeFlow protocol.

4. The cellular network controller according to claim 1, wherein the policy control module has control plane functions of an IP layer and upper layers of the IP layer.

5. The cellular network controller according to any one of claims 1 to 4, wherein the event information comprises network topology information of the radio network access network and/or state information of the radio network user.

6. A border gateway router, comprising:
a policy receiving module, configured to receive a bearer forwarding policy of a handover user that is delivered by a cellular network controller, wherein the bearer forwarding policy is formulated by the cellular network controller according to event information pre-stored in the cellular network controller and a wireless handover request from a radio network user or a radio network access network; and
a policy executing module, configured to forward, according to the bearer forwarding policy received by the policy receiving module, a packet sent to the handover user.

7. The router according to claim 6, wherein the policy executing module has user plane processing functions of an IP layer and upper layers of the IP layer.

8. A radio network access device, comprising:
an event information reporting module, configured to: when a specific radio network user generates set event information, send the event information to a cellular network controller, so that the cellular network controller applies the behavior event information to formulating of a bearer forwarding policy of a handover user; and
a policy receiving and executing module, configured to receive the bearer forwarding policy of the handover user that is delivered by the cellular network controller, and forward, according to the bearer forwarding policy, a packet sent to the handover user.

9. The radio access device according to claim 8, wherein the policy receiving and executing module receives the bearer forwarding policy based on the OpenFlow protocol.

10. The radio access device according to claim 9, wherein the policy receiving and executing module receives the bearer forwarding policy based on the OpenRadio protocol.

11. A wireless network architecture, comprising the cellular network controller according to any one of claims 1 to 5, the border gateway router according to any one of claims 6 to 7, and the radio network access device according to any one of claims 8 to 10.

12. A method for processing network access of a radio network user, wherein the method is applied to a cellular network controller and comprises:
receiving an access request of a radio network user, wherein the access request comprises identifier information of the radio network user and related information of an access network;
authenticating an identifier of the radio network user and identifying an access location of the radio network user according to the identifier information of the radio network user and the related information of the access network;
performing authorization and authentication on the radio network user;
specifying a border gateway router for the radio network user according to the identifier information of the radio network user and the access location of the radio network user and with reference to event information stored in the cellular network controller, and delivering an address of the border gateway router to the radio network user, wherein the border gateway router is used to assign an IP address to the radio network user;
receiving context information of the radio network user that is updated by the border gateway router, and formulating a bearer forwarding policy for the radio network user according to the context information, wherein the updated context information of the radio network user is obtained after the border gateway router fills the IP address assigned to the radio network user in a corresponding location of the context information of the radio network user; and
delivering the bearer forwarding policy to the border gateway router.

13. The method according to claim 12, wherein the bearer forwarding policy of the user is determined by the cellular network controller and the router through negotiation, and the method further comprises:
delivering the bearer forwarding policy to a radio access device.

14. A method for processing a radio network user handover, comprising:
receiving a path switching request of a radio network user that is sent by using a target radio access device;
updating context information of the radio network user according to the handover request, and sending an update request to a border gateway router to which the radio network user currently belongs, to instruct the border gateway router to update a data bearer forwarding policy of the user, and send a data bearer of the user to the target radio access device;
receiving an update response message for the update request that is sent by the border gateway router; and
sending a path switching request acknowledgment to the radio network user by using the target radio access device, wherein the path switching request acknowledgment indicates that a radio bearer of the user has been switched.

15. The method according to claim 14, wherein after the sending a path switching request acknowledgment to the radio network user by using the target radio access device, the method further comprises:
determining whether an IP address needs to be re-assigned to the radio network user; and
comprising an IP address request message into an update request if an IP address needs to be re-assigned to the radio network user, so that after receiving the update request, the border gateway router to which the radio network user currently belongs delivers a new IP address to the radio network user, wherein the new IP address is carried in the update response message.

16. The method according to claim 15, wherein after the receiving a path switching request of a radio network user that is sent by using a target radio access device, further comprises:
determining, according to an address of the target radio access device, whether a handover needs to be performed for the radio network user;
specifying a new border gateway router as a target border gateway router for the radio network user if a handover needs to be performed for the radio network user; and
sending a connection setup request to the target border gateway router, wherein the connection setup request carries an IP address request message, so that after receiving the IP address request message, the target router delivers the update response message that carries an IP address to the radio network user.

17. The method according to claim 16, wherein the method further comprises:
negotiating the bearer forwarding policy of the user with the target border gateway router, and formulating a new bearer forwarding policy of the user according to a topology condition of a current network and a condition of the radio network user; and
delivering the new bearer forwarding policy of the user to the target border gateway router or the target radio access device.

18. A method for processing network access of a radio network user, comprising:
receiving an IP address setup request initiated by a radio network user;
assigning an IP address to the radio network user and storing context information of the radio network user;
filling the IP address assigned to the radio network user in a corresponding location of the context information of the radio network user, to obtain updated context information of the radio network user;
reporting the updated context information of the radio network user to a cellular network controller, so that the cellular network controller formulates a bearer forwarding policy for the radio network user according to the updated context information of the radio network user; and
receiving the bearer forwarding policy formulated by the cellular network controller for the radio network user.

19. A method for processing a radio network user handover, comprising:
receiving an update instruction of a cellular network controller, wherein the update instruction carries an IP address request message, and the update instruction is sent by the cellular network controller when updating context information of the radio network user after the cellular network controller receives a handover request of the radio network user;
re-assigning an IP address to the radio network user according to the IP address request message; and
receiving a bearer forwarding policy for the radio network user that is formulated for the radio network user and updated by the cellular network controller, wherein the updated bearer forwarding policy for the radio network user formulated for the radio network user is a new bearer forwarding policy formulated by the cellular network controller for the radio network user according to a topology condition of a current network and a condition of the radio network user.

20. The method according to claim 19, wherein after the re-assigning an IP address to the radio network user according to the IP address request message, the method further comprises:
completing, according to the update instruction, data switching with a router newly specified by the cellular network controller.
